# FASCICULE DE BREVET EUROPEEN

(11) **EP 1 641 178 B1**
(45) Date de publication et mention de la délivrance du brevet: **29.11.2006**
(21) Numéro de dépôt: 04425714.5
(22) Date de dépôt: 27.09.2004
(51) Int. Cl.: H04L 12/28

(54) **Procede de communication et installation domotique pour sa mise en oeuvre**
Verfahren und System zur Übertragung in einem Hausnetzwerk
Method and system for transmission in a home network

(43) Date de publication de la demande: 29.03.2006
(73) Titulaire: BFT SpA, 36015 Schio (VI) (IT)
(72) Inventeur: Billo, Fabio, 36031 Dueville (VI) (IT)
(74) Mandataire: Bugnion Genève

(56) Documents cités:
- EP-A- 0 443 103
- EP-A- 0 604 167
- WO-A-01/54298
- WO-A-03/075105
- FR-A- 2 518 858
- GB-A- 1 360 605
- MOTOROLA APPLICATION NOTE AN1816, [Online] 1999, XP002311480 Extrait de l'Internet: URL:http://www.freescale.com/files/microco ntrollers/doc/app_note/AN1816.pdf> [extrait le 2004-12-20]

## Description

L'invention concerne un procédé de communication selon le préambule de la revendication 1. Elle concerne également une installation domotique de manoeuvre motorisée d'un élément mobile de fermeture, d'occultation ou de protection solaire ou d'un écran, une unité maître contrôlant l'alimentation d'un moteur électrique pour manoeuvrer un élément mobile de fermeture, d'occultation ou de protection solaire ou d'un écran et une unité esclave destinée à être reliée à une telle unité maître.

Dans le domaine de la domotique, des éléments mobiles tels que notamment des portes, des volets, des stores, des écrans, des barrières ou des portails sont manoeuvrés grâce à des actionneurs électriques. Un actionneur comprend généralement un moteur électrique et est relié à une unité électronique de gestion de l'alimentation de ce dernier. L'actionneur est alimenté par une source de tension alternative (par exemple 230 Volts) ou par une source de tension continue (par exemple 24 Volts).

Un actionneur électrique est en général lié ou susceptible d'être lié à un large panel de dispositifs électriques permettant d'assurer notamment des fonctions de commande de l'actionneur (dites fonctions d'entrée), des fonctions d'information (par exemple de l'utilisateur) ou de sécurité dont certaines sont imposées par les normes de sécurité relatives au domaine de la domotique, ces fonctions d'information ou de sécurités étant dites de sortie. Ces dispositifs électriques peuvent notamment être des cellules photoélectriques, des capteurs, des récepteurs d'ondes radioélectriques, des lampes clignotantes, des boutons d'arrêt d'urgence et des digicodes.

L'unité électronique de gestion comprend normalement un circuit d'alimentation, une unité de contrôle logique, des circuits de commande d'alimentation pour piloter le moteur et des circuits d'interface pour connecter différents dispositifs électriques. Elle peut être une entité physique séparée de l'actionneur.

La multiplicité de ces dispositifs électriques rend l'installation et le câblage de tels systèmes relativement fastidieux. Ceci est à l'origine d'un coût élevé et conduit souvent à de nombreuses erreurs.

Pour remédier à ce problème, il est connu de relier l'unité électronique de gestion et les différents dispositifs électriques périphériques nécessaires par le biais d'un bus de transmission. L'architecture d'un tel système permet d'assurer les mêmes fonctionnalités que celles assurées par un système dans lequel l'unité électronique centralise les connections et les informations.

On retrouve de tels bus dans différents brevets ou demandes de brevets.

On connaît de la demande WO 03/104907, une installation de commande des mouvements d'un portail ou d'une porte comprenant un bus de transmission d'information et d'énergie électrique, une unité d'alimentation électrique et d'émission/réception d'informations et au moins trois autres unités ; une première unité étant destinée à piloter l'alimentation électrique d'un moteur d'entraînement du portail ou de la porte, une deuxième unité étant reliée à une interface de commande des mouvements de la porte et une troisième unité étant reliée à un dispositif de sécurité.

On connaît de la demande WO 89/04578, un réseau comprenant différentes cellules identiques capables de remplir une ou plusieurs des fonctions suivantes : détecter, commander et communiquer. Elles sont reliées par un bus pouvant notamment être matérialisé par une paire de conducteurs torsadés ou un réseau de courant porteur.

On connaît du brevet US 4,788,527, un réseau de transmission d'informations entre des capteurs et des cellules de contrôle distantes par un bus DC à deux conducteurs transmettant simultanément l'alimentation des différents éléments.

On connaît de la demande FR 2 741 496, un réseau domotique basse tension pour la commande de dispositifs électriques.

On connaît de la demande EP 0 507 365 un réseau comprenant un bus d'alimentation et de transmission de données pour commander différents dispositifs d'écrans motorisés.

Dans le cas où l'on utilise un tel bus dans un réseau sécurisé, il est nécessaire de s'assurer que les informations transmises le sont correctement et qu'elles sont également reçues correctement par le bon destinataire. Une quantité ou une fréquence élevée des données transmises conduit à une saturation rapide du bus et à une mauvaise émission ou réception des données au niveau des différents éléments du réseau. L'utilisation des mêmes câbles pour l'alimentation et pour la transmission des données peut également provoquer des perturbations préjudiciables au transfert de données.

Un tel problème d'intégrité de la transmission est abordé dans la demande de brevet WO 03/104907. Les solutions envisagées pour répondre à celui-ci sont les suivantes:
- utilisation d'un identifiant précis pour chaque unité,
- utilisation d'une configuration maître-esclave, les unités esclaves attendent alors d'être interrogées par l'unité maître pour émettre à leur tour une réponse,
- retour d'information sous la forme d'un simple accusé de réception ou d'un message de confirmation,
- duplication des seuls messages ayant une certaine priorité pour limiter le problème induit de l'augmentation du trafic de données,
- utilisation d'une procédure de contrôle de l'intégrité de la trame (somme de contrôle ou contrôle de redondance cyclique).

Ces dernières solutions ont tendance à augmenter les longueurs de trames des messages et donc à augmenter l'utilisation des ressources matérielles. Elles ne répondent par conséquent que partiellement au problème évoqué.

On connaît également du document « Using the HC912B32 to implement the distributed systems interface (DSI) protocol » publié par la société Motorola, Inc, un réseau d'éléments reliés par un bus. Ce réseau comprend une unité maître et des unités esclaves. Les informations sont transmises par des communications duplex entre l'unité maître et les unités esclaves. Les informations émises par l'unité maître sont modulées en tension tandis que les informations émises par les unités esclaves sont modulées en courant. La réponse d'un esclave à une commande de l'unité maître a lieu durant la transmission de la commande suivante.

Le but de l'invention est de fournir un procédé de communication améliorant les procédés connus et permettant de pallier aux inconvénients précédemment évoqués. En particulier, le procédé de communication doit être simple, rapide, assurer une transmission intègre des données, économiser les ressources du réseau et permettre d'identifier sans erreur les différentes unités. Le procédé selon l'invention doit en outre permettre la communication entre un dispositif motorisé de manoeuvre d'un élément mobile d'un bâtiment et des éléments de commande de ce dispositif ou des éléments de sécurité. Le but de l'invention est également de fournir des unités électroniques dites « maître » et « esclave » permettant de mettre en oeuvre le procédé de communication et une installation comprenant de telles unités.

Le procédé de communication selon l'invention est caractérisé par la partie caractérisante de la revendication 1.

Les revendications dépendantes 2 à 10 définissent différents modes d'exécution du procédé de communication.

L'installation domotique selon l'invention est définie par la revendication 11.

Les revendications dépendantes 12 et 13 définissent différents modes de réalisation de l'installation.

L'unité maître selon l'invention est définie par la revendication 14.

La revendication dépendante 15 définit une variante de réalisation de l'unité maître.

L'unité esclave selon l'invention est définie par la revendication 16.

Le dessin annexé représente, à titre d'exemple, un mode d'exécution du procédé de communication selon l'invention et un mode de réalisation d'une installation permettant de mettre en oeuvre ce procédé.
La figure 1 est un schéma d'un mode de réalisation d'une unité maître selon l'invention.
La figure 2 est un schéma d'un mode de réalisation d'une unité esclave selon l'invention.
La figure 3 est un schéma d'une trame de commande émise par l'unité maître.
La figure 4 est un schéma d'une trame de commande spécifique émise par l'unité maître.
La figure 5 est un schéma d'une trame de configuration émise par l'unité maître.
La figure 6 est un ordinogramme représentant une procédure de synchronisation de deux cellules photoélectriques de sécurité.
La figure 7 est un ordinogramme représentant les diverses réactions possibles des unités esclaves aux trames émises par l'unité maître, dans une première variante de fonctionnement de l'installation.

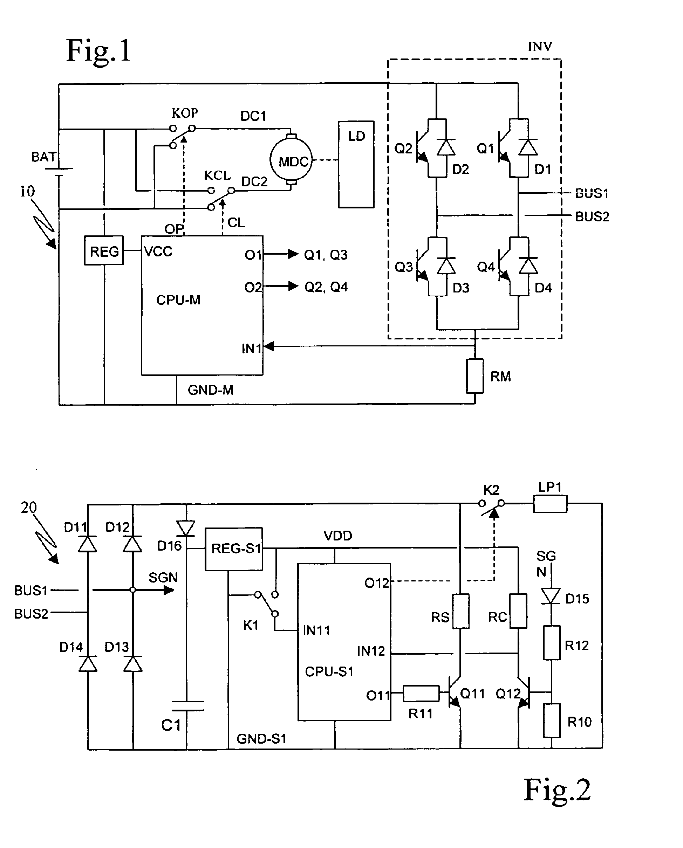

Une unité maître 10 et une unité esclave 20 d'une installation selon l'invention sont respectivement représentées aux figures 1 et 2. Dans la suite de la description, l'unité maître est aussi appelée « unité électronique » et les unités esclaves sont appelées « accessoires ». Les unités sont dénommées « maître » et « esclave » seulement par rapport à leur protocole de communication et non nécessairement par rapport à leurs relations fonctionnelles dans l'installation.

L'unité maître 10 et l'unité esclave 20, ou les unités esclaves, communiquent par un bus filaire à deux conducteurs BUS1 et BUS2. Dans le mode de réalisation représenté, le bus filaire est également utilisé pour alimenter chacune des unités esclaves, sous une tension alternative, cependant il est possible de séparer les fonctions d'alimentation et de communication, au prix d'un câblage plus complexe.

L'unité maître 10 est alimentée par un générateur continu BAT. Il peut s'agir d'une batterie d'accumulateurs, par exemple rechargée par un panneau photovoltaïque, mais il peut aussi s'agir de la sortie d'un convertisseur alternatif - continu dont l'entrée est alimentée par le réseau alternatif électrique (non représenté). La tension de sortie du générateur continu BAT est par exemple 24 V. Le pôle négatif du générateur est raccordé à une masse électrique GND-M de l'unité maître 10.

Préférentiellement, l'unité maître 10 comprend un actionneur MDC permettant le déplacement d'un élément mobile LD comme une porte, une barrière, un portail, un store ou un écran. Dans le mode de réalisation décrit, cet actionneur est un moteur à courant continu MDC. Cependant, un moteur à courant alternatif, par exemple un moteur à induction monophasé, peut tout aussi bien convenir s'il peut être alimenté directement par une source d'alimentation alternative.

Le moteur est alimenté pour tourner dans un premier sens ou dans un deuxième sens à l'aide de deux relais KOP et KCL dont on a représenté les contacts inverseurs. Ces relais sont commandés par deux sorties OP et CL d'un microcontrôleur CPU-M.

Dans le cas d'un moteur alternatif alimenté par un réseau séparé, les relais KOP et KCL sont reliés à ce réseau alternatif. Il est à noter que d'autres éléments pourraient être utilisés pour contrôler le moteur, par exemple un inverseur ou un thyristor.

Le microcontrôleur CPU-M est alimenté sous une tension continue réduite VCC, par exemple 5 volts, par connexion à la sortie d'un régulateur REG dont les deux entrées sont raccordées au générateur continu BAT.

L'unité maître comprend également un circuit onduleur INV. Ce circuit comprend un pont en H formé par quatre interrupteurs commandés Q1 à Q4. Les électrodes de commande de ces interrupteurs Q1 et Q3 sont raccordées à une même première sortie O1 du microcontrôleur CPU-M et Les électrodes de commande des interrupteurs Q2 et Q4 sont raccordées à une même deuxième sortie 02 du microcontrôleur CPU-M. Les sorties O1 et O2 ne sont pas activées simultanément. Le point commun aux interrupteurs commandés Q1 et Q4 est connecté au conducteur BUS1 et le point commun aux interrupteurs commandés Q2 et Q3 est connecté au conducteur BUS2.

Préférentiellement, les deux conducteurs de bus constituent un câble torsadé. Du fait du caractère partiellement inductif de la liaison aux unités esclaves, ou du fait du caractère inductif des unités esclaves elles-mêmes, des diodes de roue-libre D1-D4 sont disposées en parallèle avec les interrupteurs commandés Q1-Q4. Ces diodes sont intrinsèques si des transistors MOS sont utilisés comme interrupteurs commandés.

Une résistance RM de faible valeur sert de résistance de mesure de l'intensité du courant circulant à un instant donné dans l'onduleur, donc dans le bus. Par exemple, la résistance RM vaut 1 ohm, et la tension à ses bornes atteint 1 volt si le courant total circulant vers les unités esclaves vaut 1 amère.

Dans ces conditions, et pour une tension de générateur égale à 24 V, on recueille +23 V aux bornes du bus quand la première sortie O1 est active, alors qu'on recueille -23 V quand la sortie O2 est active. L'utilisation d'une tension alternative sur la ligne de bus double l'amplitude du signal, ce qui améliore considérablement l'immunité au bruit.

La résistance de mesure RM est reliée à la masse électrique GND-M, et la tension aux bornes de la résistance de mesure RM est appliquée à une entrée de mesure IN1 du microcontrôleur CPU-M, typiquement une entrée de convertisseur analogique-digital. De cette manière, le courant circulant dans le bus et alimentant les unités esclaves est mesuré par l'unité maître.

La mesure du courant dans la résistance RM sert également à la détection de collisions si plusieurs unités esclaves cherchent à communiquer simultanément avec l'unité maître.

L'unité esclave comprend un microcontrôleur CPU-S1, alimenté à l'aide d'un régulateur esclave REG-S1, lui-même alimenté à partir de la tension disponible sur le bus, redressée par un pont de diodes D11-D14 et filtrée par un condensateur C1. Les anodes communes du pont redresseur sont reliées à une masse électrique de l'esclave GND-S1. Les masses électriques des unités esclaves et de l'unité maître ne sont pas raccordées. Le condensateur C1 est placé entre la masse électrique GND-S1 et la cathode d'une diode D16. L'anode de la diode D16 est raccordée aux cathodes communes du pont redresseur. Les bornes d'entrée du régulateur REG-S1 sont également raccordées aux bornes du condensateur C1. Comme il est connu de l'homme du métier, une résistance de faible valeur, non représentée, peut être placée en série avec la diode D16, de manière à éviter un courant trop important dans les diodes et/ou dans le bus quand on raccorde une unité esclave dont le condensateur est non chargé. Cette résistance a également pour fonction de limiter le courant lors de l'inversion de polarité sur le bus due à la modulation de tension.

La sortie du régulateur (typiquement 5 volts) est raccordée à une ligne d'alimentation positive VDD, reliée au microcontrôleur CPU-S1. La ligne d'alimentation positive VDD est aussi reliée à une borne d'une résistance de collecteur RC d'un montage à transistor Q12 fonctionnant en inverseur logique et adaptateur de tension. La deuxième borne de la résistance RC est raccordée au collecteur du transistor de signal Q12 et à une deuxième entrée logique IN12 du microcontrôleur.

Le transistor Q12 est piloté par la tension prise entre le conducteur BUS1 et la masse électrique de l'unité esclave GND-S1. Entre ces deux points, on a disposé en série une diode D15, une résistance de base R12, raccordée à la base du transistor de signal Q12, et une résistance de blocage R10, disposée entre la base et l'émetteur du transistor de signal Q12. Quand la tension entre le conducteur BUS1 et le conducteur BUS2 est négative, la diode D15 est bloquée, et il en est de même du transistor Q12. Le potentiel de ta deuxième entrée IN12 est alors celui de la ligne d'alimentation positive VDD, ce qui correspond à un état logique haut de cette entrée.

Inversement, quand la tension entre le conducteur BUS1 et le conducteur BUS2 est positive, la diode D15 conduit, de même que la jonction base-émetteur du transistor de signal Q12 qui devient saturé si la résistance de base R12 est suffisamment faible: Le transistor de signal Q12 se comporte alors comme un court-circuit entre collecteur et émetteur et la deuxième entrée IN12 prend le potentiel de la masse électrique GND-S1, ce qui correspond à un état logique bas.

Ainsi, le microcontrôleur CPU-S1 a connaissance à tout instant des polarités du bus, ce qui permet le transfert d'informations modulées en tension depuis l'unité maître vers l'unité esclave. Ces informations sont contenues dans un signal électrique généré par les commutations des interrupteurs Q1, Q2, Q3 et Q4 commandés par les sorties O1 et O2 du microcontrôleur CPU-M. Ces informations peuvent ensuite être traitées par le microcontrôleur CPU-S1.

Inversement, l'unité esclave 20 peut moduler le courant qu'elle absorbe en connectant ou déconnectant un élément RS consommant de l'énergie électrique. Cet élément est par exemple une simple résistance placée entre les anodes communes du redresseur et le collecteur d'un transistor de puissance Q11 dont l'émetteur est relié à la masse électrique GND-S1. La base de ce transistor est raccordée à une première sortie O11 du microcontrôleur CPU-S1 à travers une résistance R11. Quand la première sortie O11 passe à l'état haut, la résistance RS devient parcourue par un courant qui s'ajoute au courant circulant déjà pour alimenter l'unité esclave 20. Ce courant est mesurable par l'unité maître au niveau de l'entrée IN1 du microcontrôleur CPU-S1 mesurant la tension aux bornes de la résistance de mesure RM. Ainsi, des informations modulées en courant peuvent être transmises de l'unité esclave vers l'unité maître. Ces informations peuvent ensuite être traitées par le microcontrôleur CPU-M.

Le rôle de la diode D16 est d'éviter qu'une partie de ce courant absorbé par l'élément RS soit fournie par le condensateur C1, ce qui nuirait à la transmission d'information vers l'unité maître.

Si le microcontrôleur le permet, la résistance R11 et le transistor Q11 sont intégrés sous forme d'une sortie « collecteur ouvert ». La résistance RC peut aussi être intégrée, de même que le transistor Q12. Le circuit esclave est alors particulièrement simple.

L'unité esclave 20 comprend une fonction de type entrée et une fonction de type sortie. La fonction de type entrée permet qu'une action de l'unité esclave ait pour conséquence une action de l'unité maître alors que la fonction de type sortie permet qu'une action de l'unité esclave soit la conséquence d'une action de l'unité maître.

Dans l'unité esclave 20, une fonction de type entrée est assurée par un inverseur K1 permettant de relier une entrée IN11 du microcontrôleur CPU-S1 à la sortie positive du régulateur REG-S1 ou à la masse GND-S1. L'inverseur K1 est par exemple un bouton de commande sur lequel chaque impulsion est destinée à donner un ordre de mouvement de l'élément mobile LD, selon un cycle à quatre temps : Ouverture, Stop, Fermeture, Stop.

Dans l'unité esclave 20, une fonction de type sortie est assurée par un interrupteur K2 commandé par une sortie 012 du microcontrôleur CPU-S1 agissant sur un récepteur électrique. L'interrupteur K2 peut par exemple commander le clignotement d'une lampe de signalisation LP1 servant par exemple à avertir d'un danger lors de la fermeture de l'élément mobile LD. La lampe de signalisation LP1 est alimentée à travers l'interrupteur commandé par la tension disponible aux bornes du redresseur. Il est également possible d'alimenter cette lampe ou le récepteur électrique directement sur le bus d'alimentation et communication, entre les conducteurs BUS1 et BUS2 si ce récepteur électrique accepte une tension alternative et si l'interrupteur commandé K2 présente, comme un relais, une isolation galvanique de sa commande. L'interrupteur K2 pourrait alimenter tout autre type de récepteurs électriques en remplacement de la lampe de signalisation LP1.

Ainsi, il est envisageable que le moteur d'entraînement de l'élément mobile soit lui-même raccordé à une unité esclave. Dans ce cas, l'interrupteur K2 deviendrait de type multipolaire, et permettrait la connexion du moteur à une source d'énergie séparée.

L'unité esclave peut présenter différentes fonctions de type sortie. Dans ce cas, le microcontrôleur CPU-S1 présente autant de sorties de commande (du type de la sortie O12 représentée) que de fonctions de type sortie. Ces sorties commandent des interrupteurs commandés pilotant l'alimentation des différents dispositifs électriques permettant d'assurer différentes fonctions.

Un deuxième condensateur pourrait être alimenté à travers une diode et une résistance, formant un circuit non représenté parallèle à l'ensemble constitué par le condensateur C1 et la diode D16. Un tel condensateur servirait de réserve d'énergie électrique pour alimenter un dispositif électrique dont l'usage est intermittent. Ce condensateur se chargerait lentement sur le bus pendant les périodes où le récepteur électrique n'est pas activé.

De même, l'unité esclave peut présenter différentes fonctions de type entrée. Dans ce cas, le microcontrôleur CPU-S1 présente autant d'entrées de commande (du type de l'entrée IN11 représentée) que de fonctions de type entrée. L'état des entrées est commandé par différents moyens permettant d'assurer ces différentes fonctions.

Si un élément dispose de plusieurs fonctions (par exemple les fonctions « ouverture », « fermeture» et « STOP » obtenues respectivement par un bouton de commande d'ouverture, un bouton de commande de fermeture et un bouton de commande d'arrêt), chaque fonction est repérée par un identifiant propre et donc considérée comme une unité distincte.

L'unité esclave 20 décrite permet à plusieurs fonctions de type entrée et de type sortie de partager les mêmes ressources matérielles dans un même ensemble physique raccordé au bus. Dans ce cas, un seul pont redresseur, un seul condensateur de filtrage, un seul régulateur et un seul microprocesseur sont utilisés. Un seul circuit inverseur comportant le transistor de signal Q12 est également partagé, de même que l'élément RS et le transistor de puissance Q11. Il est par contre nécessaire de prévoir autant d'entrées sur le microcontrôleur CPU-S1 qu'il existe de fonctions « entrée » et de prévoir autant de sorties sur le microcontrôleur CPU-S1 qu'il y a de fonctions « sortie ».

Cependant, il est clair que l'intérêt du protocole de communication et de l'installation permettant sa mise en oeuvre est de permettre également facilement la délocalisation des fonctions.

### Messages de commande

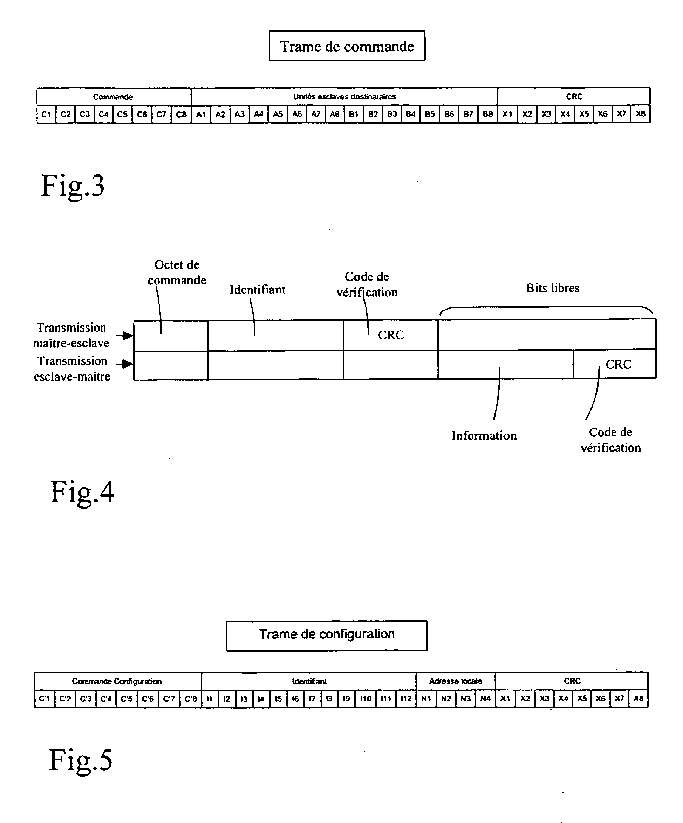

Dans le procédé de communication selon l'invention, l'unité maître émet des trames de commande comprenant par exemple 4 octets d'informations. Chaque trame fait suite à une bit de début de trame (non représenté). Comme représenté à la figure 3, le premier octet de la trame de commande comprend un code de commande correspondant à une action ou un état d'un dispositif d'actionnement, d'information ou de sécurité relié à une unité esclave. Les bits des deuxième et troisième octets sont associés aux unités esclaves reliées à l'unité maître. Au cours de la transmission d'un bit du deuxième ou troisième octet, l'information peut circuler simultanément aussi bien de l'unité maître à une unité esclave que d'une unité esclave à l'unité maître. Le quatrième octet comprend le résultat d'un calcul de vérification (code d'intégrité) portant sur le contenu des 3 octets précédents. Il n'est émis que par l'unité électronique. Chaque trame est précédée d'un bit de début de trame.

Chacun des 8 bits du deuxième et troisième octet (A1 à B8) est donc spécifique à un accessoire.

L'association entre un bit du deuxième ou du troisième octet et un accessoire spécifique est assurée par une adresse locale, définissant la place d'un bit de la trame. L'unité électronique affecte une adresse locale à chaque accessoire lors d'un procédé de configuration décrit plus loin.

Dans l'exemple, l'unité esclave ayant l'adresse locale équivalente à A1 sera associée au premier bit du deuxième octet de la trame et l'unité esclave ayant l'adresse locale équivalente à A8 sera associée au dernier bit de ce même octet.

Le choix de deux octets pour l'identification des différentes unités esclaves est arbitraire. Il permet cependant d'associer 16 unités esclaves (une unité esclave par bit), ce qui semble suffisant dans un système de manoeuvre motorisée de barrière.

L'adresse locale sera donc codée sur 16 bits dans une trame de commande, avec un bit par adresse, et codée sur 4 bits (représentant 16 choix possibles) dans une trame de configuration qui sera vue plus loin.

Par exemple, pour une fréquence d'alimentation de 1 KHz et en considérant une trame de 4 octets de long (permettant de communiquer avec 16 accessoires), la transmission d'un message de commande complet (hors le bit de début de trame) prend 32 ms. Ce temps est tout à fait compatible avec les applications typiques de ce domaine.

Le codage de la trame suit un format connu, par exemple un codage Manchester (une transition Haut-Bas ou Bas-Haut par bit transmis). Il peut aussi être du type présenté dans le document « Using the HC912B32 to implement the distributed systems interface (DSI) protocol » publié par la société Motorola, Inc. De préférence, le codage utilisé est auto-synchronisé et sa valeur moyenne est nulle.

On distingue dans le procédé de communication plusieurs types de communications. D'une part, l'unité maître doit pouvoir interroger les unités esclaves sur leur état. Cette interrogation est liée principalement aux unités esclaves assurant une fonction de type entrée. D'autre part, l'unité maître doit pouvoir envoyer une instruction d'état à une unité esclave. Cet envoi est lié principalement aux unités esclaves assurant une fonction de type sortie.

En réponse, les unités esclaves doivent pouvoir transmettre leur état, pour répondre à l'interrogation ou pour confirmer l'enregistrement d'une instruction d'état.

Enfin, l'unité maître doit pouvoir lire ou comparer les états retournés par les unités esclaves pour en déduire les actions à mettre en oeuvre.

Les fonctionnalités du procédé de communication permettent à l'unité maître d'analyser des changements d'état des unités esclaves assurant une fonction d'entrée pour mettre en oeuvre les fonctions associées, de contrôler les états des unités esclaves assurant une fonction de sortie pour vérifier la disponibilité et/ou le bon fonctionnement des dispositifs électriques qu'elles commandent.

Une commande envoyée de l'unité maître vers toutes les différentes unités esclaves est gérée au cours d'une seule trame de commande. Chaque unité esclave est identifiée dans la trame de commande par un bit particulier du deuxième et troisième octet. Pour gérer la commande au cours d'une seule trame, cela implique qu'au cours de cette trame une information doit être émise par l'unité maître en direction des unités esclaves et une information doit être émise par l'une des unités esclaves en direction de l'unité maître.

Pour chaque unité esclave à laquelle la commande est adressée, une communication bidirectionnelle intervient au cours de la transmission du bit d'identification de l'unité esclave.

Le mot de commande, repéré par les adresses C1 à C8 dans le premier octet permet de distinguer le type de communication qui a lieu. Ce mot de commande est reçu et lu, au moins partiellement, par toutes les unités esclaves.

### Réaction des unités esclaves assurant une fonction de type entrée

Chaque unité esclave assurant une fonction de type entrée doit être capable de signaler à l'unité maître son état (ou son changement d'état par rapport à la dernière interrogation).

L'unité maître interroge périodiquement (quasiment en continu) les unités esclaves pour connaître leur état ou détecter par comparaison les changements d'états des unités esclaves assurant une fonction de type entrée. Lorsqu'une action d'une unité esclave, par exemple un automatisme, assurant une fonction de type entrée ou une action exercée sur une unité esclave assurant une fonction de type entrée est détectée, par exemple un appui sur un bouton poussoir de commande du mouvement de l'élément mobile, l'unité maître pilote l'actionneur en fonction de l'état de l'unité esclave activée et gère également les différents états des autres unités esclaves, par exemple des unités esclaves assurant des fonctions de type sortie.

Chaque unité esclave répond à l'unité maître en générant une impulsion de courant représentant son état.

L'unité maître peut délivrer un deuxième message, identique ou non au premier, permettant à l'unité esclave de confirmer à l'unité maître son changement d'état. Dans ce cas par exemple, le nouvel état de l'unité esclave n'est validé au sein de l'unité maître que lorsqu'il a été transmis deux fois successivement à l'unité maître dans une plage temporelle donnée.

### Réaction des unités esclaves assurant une fonction de type sortie :

Dans une seule trame, l'unité maître transmet aux différentes unités esclaves assurant une fonction de type sortie, l'état qu'elles doivent conserver. Cette transmission peut être réalisée périodiquement ou faire suite à un ordre donné par une unité esclave assurant une fonction de type entrée.

Par exemple, une barre palpeuse de sécurité et des cellules photoélectriques de sécurité doivent conserver un état actif « ON » dès qu'un mouvement de l'élément mobile est initié, un dispositif anti-chute doit éventuellement être actif en permanence et un voyant ne doit s'allumer que dans des situations bien précises de l'élément mobile (par exemple lorsqu'un obstacle a été détecté).

Chaque unité esclave assurant une fonction de type sortie confirme la réception de l'information, par exemple en envoyant un écho de la valeur reçue dans le bit l'identifiant, en modifiant le courant à travers les conducteurs du bus par activation ou non du transistor de puissance Q11.

En revanche, la commande n'est pas exécutée immédiatement. En effet, l'unité esclave assurant une fonction de type sortie attend d'avoir reçu la totalité de la trame et d'avoir vérifié l'exactitude du code d'intégrité contenu dans le quatrième octet de la trame avant d'exécuter l'ordre si ce code est correct. Dans certains cas cependant, décrits plus loin, une commande peut être exécutée avant vérification du code d'intégrité.

La vérification de la concordance entre une valeur calculée par les unités esclaves à partir des trois premiers octets de la trame et la valeur contenue dans le quatrième octet de la trame provoque donc l'exécution de la commande par les unités esclaves assurant des fonctions de sortie. Cette vérification peut être faite par l'utilisation d'un contrôle de redondance cyclique (en anglais : « cyclic redundancy check », ou CRC).

Bien qu'il soit fait référence de manière séparée à des unités esclaves assurant une fonction de type entrée ou sortie, un même message de commande permet de gérer toutes les unités esclaves assurant une fonction d'entrée et toutes celles assurant une fonction de sortie.

### Messages de commande spécifiques :

Pour certaines unités esclaves, il est utile d'échanger plus qu'un simple état binaire.

Par exemple, si un récepteur radio est connecté au bus, il est considéré dans l'installation comme une unité esclave assurant une fonction d'entrée. Chaque fois que ce récepteur détecte un signal radio émis en provenance d'un émetteur radio de l'installation, son état va changer : il passe de l'état inactif « OFF » à l'état actif « ON ».

Lors d'un message de commande émis par l'unité maître, le récepteur radio signale son changement d'un état inactif à un état actif par l'émission d'une pulsation de courant. En conséquence, l'unité maître peut alors envoyer au récepteur radio un message de commande spécifique pour obtenir par exemple la teneur de l'ordre radio transmis.

Dans ce cas, comme représenté à la figure 4, le contenu du mot de commande signale aux unités esclaves qu'il s'agit d'une commande spécifique et que, par conséquent, les bits des deuxième et troisième octets ne correspondent plus à des bits identifiant les unités esclaves. Celles-ci ignorent la commande ou vérifient que celle-ci ne leur est pas adressée en particulier (par utilisation de l'identifiant de l'unité esclave).

Comme représenté à la figure 4, certains bits de la trame de commande spécifique sont libres. L'unité esclave ayant reçu une trame de commande spécifique utilise l'intervalle de temps associé à ces bits libres pour envoyer sous forme de modulation de courant, des informations sur la commande reçue par le récepteur radio et/ou sur l'identité de l'émetteur radio dont il a reçu la commande.

En pratique, les trames de commandes spécifiques sont plus longues que les trames de commande classique, pour avoir suffisamment de bits libres pour la réponse de l'unité esclave. Les bits libres servent alors à synchroniser dans le temps les réponses de l'unité esclave.

Deux manières de vérifier l'intégrité de la trame de commande spécifique émise par l'unité maître peuvent être mises en oeuvre :
1. Dans la mesure où l'unité esclave peut fournir une information à l'unité maître au cours de la transmission d'une trame, l'unité esclave lit les bits du code d'intégrité CRC et les répète à l'identique. Au moment de la transmission du dernier bit de code d'intégrité, l'unité esclave vérifie le code d'intégrité. S'il s'avère incorrect, il suffit alors à l'unité esclave de modifier sa réponse sur le dernier bit. L'unité maître en déduit que le code d'intégrité est incorrect et réémet un message de commande spécifique.
2. Dans la mesure où certains bits de la trame de commande sont libres, il est également possible de séparer la transmission du calcul d'intégrité en provenance de l'unité maître de celui en provenance de l'unité esclave. Ainsi, l'unité esclave vérifie l'intégrité de la commande transmise avant de répondre à son tour en utilisant des bits libres.
   En pratique, les unités esclaves connectées au bus sont donc capables de gérer des messages de commande et des messages de configuration, et seules certaines unités esclaves pourront gérer des messages de commande spécifiques correspondant à leur identifiant.

### Configuration :

La configuration prend deux formes principalement :
1. L'unité maître balaie en séquence, dans toutes les classes d'accessoires , les identifiants successifs et l'unité esclave répond à la configuration lorsqu'elle repère son propre identifiant.
2. L'unité maître interroge un nouvel entrant sur le bus (une procédure peut être mise en oeuvre au niveau de l'unité maître de manière à passer en mode configuration dès qu'un nouvel accessoire est connecté au bus).

La connexion de nouvelles unités esclaves sur le bus est détectée automatiquement grâce à un procédé connu, par exemple grâce au procédé décrit au pages 6 et 7 du document « Using the HC912B32 to implement the distributed systems interface (DSI) protocol » publié par la société Motorola, Inc. Les unités esclaves peuvent être placées dans une configuration en parallèle ou en chaîne bouclée.

L'auto-détection de nouveaux accessoires ne doit être active que dans des phases bien précises de la configuration, par exemple dans un mode particulier de programmation de l'unité esclave, et/ou pour des niveaux de sécurité donnés. En effet, dans le cas contraire, toute connexion d'un nouvel accessoire (directement sur une portion du bus ou en parallèle avec un accessoire déjà installé) pourrait permettre à une personne mal intentionnée de manoeuvrer l'élément mobile.

Comme représenté à la figure 5, une trame de configuration a une structure assez similaire à une trame de commande.

Un mot de commande de configuration sur un octet fourni par l'unité maître suit un premier bit de début de trame (non représenté).

L'identifiant (unique) de l'unité esclave qui doit répondre à l'ordre de configuration est codé sur le deuxième octet, le troisième octet comprenant, lui, l'adresse locale assignée à l'unité esclave qui doit répondre au message de configuration. Cette adresse locale correspond à la position du bit associé à l'accessoire dans une trame de commande.

Enfin, le quatrième octet comprend le résultat d'un calcul de vérification de la trame.

Comme il a été vu précédemment, les unités esclaves sont divisées en deux catégories, une première catégorie regroupant les unités esclaves assurant des fonctions de sortie et une deuxième catégorie assurant des fonctions d'entrée.

Les unités esclaves peuvent également être repérées par leur classe, décrivant le produit dont il s'agit. Un récepteur radio pourra ainsi représenter une première classe, un bouton-poussoir une deuxième classe, un contact à clé une troisième classe, et ainsi de suite.

Cependant, plusieurs unités esclaves d'une même classe peuvent être comprises dans l'installation.

Chaque unité esclave est alors également repérée par un code unique qui la qualifie, dans l'installation, à l'intérieur de sa classe. Ce code unique est par exemple un suffixe de 4 bits. L'identifiant de l'unité esclave comprend alors le code de classe et le suffixe. Le code de classe peut par exemple lui être fourni en usine tandis que le suffixe est choisi par l'installateur lors de son installation (coupure de contacts sur circuit imprimé, positionnement d'interrupteurs à positions multiples).

Les accessoires dits d'entrée regroupent ainsi plusieurs classes et les accessoires dits de sortie regroupent un autre groupe de classes complémentaires.

### 1^{er} cas de configuration : l'unité maître balaie systématiquement les identifiants du système

Placée dans un mode de programmation, l'unité maître émet un message d'identification contenant un identifiant possible ainsi qu'une adresse locale libre. L'unité esclave repérée par cet identifiant enregistre l'adresse locale et répond, au cours de la transmission de cette adresse, en envoyant un écho de l'adresse locale. Ainsi, l'unité maître est avertie de l'attribution d'une adresse locale.

### 2^{e} cas de configuration : l'unité maître interroge un nouvel entrant

Placée dans un mode de programmation lors de l'introduction d'une nouvelle unité esclave sur le bus, l'unité maître émet un message d'identification contenant une adresse factice, par exemple, tous les bits d'identifiant à 0. L'unité maître transmet également une adresse locale libre qui sera affectée à l'accessoire, c'est-à-dire l'emplacement dans les deuxième et troisième octets du bit identifiant l'unité esclave. Au cours de la transmission de cet identifiant factice, l'unité esclave répond en émettant une pulsation de courant de manière à transmettre son propre identifiant à l'unité électronique. L'unité esclave envoie également un écho de l'adresse locale.

Dans les deux cas, l'unité esclave peut également envoyer un écho du code de vérification reçu dans le quatrième octet.
Cette procédure peut être répétée pour confirmer la transmission de l'identifiant.

Dans la trame de configuration, le deuxième octet est affecté à l'identifiant de classe, la partie haute du troisième octet est affectée au suffixe, la partie basse du troisième octet est affectée à l'adresse locale. D'autres répartitions seront utilisées selon le nombre de classes différentes de produits, et/ou selon le nombre d'adresses locales prévues dans une installation.

Lors de la configuration, il est possible de "trier" les différents accessoires par classe, c'est-à-dire sans obligatoirement utiliser pour l'adresse locale d'un nouvel entrant, la première adresse libre dans la trame. Les unités esclaves réunissant, sous un même boîtier, plusieurs accessoires (par exemple un émetteur-récepteur photoélectrique), peuvent également répondre à une commande de configuration d'un nouvel entrant selon un ordre bien défini (l'émetteur photoélectrique dans un premier temps, à celui-ci étant affecté une adresse locale dans les premiers bits du deuxième octet, tandis que le récepteur répond dans un deuxième temps et tel qu'une adresse locale plutôt en fin de trame lui est affectée). Cette répartition est particulièrement intéressante pour le cas de contrôle de synchronisation qui sera détaillé plus loin.

### Messages de contrôle:

Il peut être prévu que l'unité maître émette à intervalles réguliers des messages de contrôle des unités esclaves, pour vérifier la présence de celles-ci et leur bon fonctionnement.

Cette procédure est nécessaire si la réponse des unités esclaves suit la règle suivante : l'état haut est signifié par une impulsion de courant, l'état bas par aucune impulsion de courant. La procédure de contrôle est décrite ci-dessous.

Le mot de commande signale alors un test au lieu d'une commande. Les unités esclaves, en particuliers les accessoires de sortie, exécutent alors éventuellement les ordres transmis sans attendre la vérification du calcul d'intégrité.

L'unité maître émet une première trame à l'intention de toutes ou partie des unités esclaves, dans laquelle les bits des deuxième et troisième octets sont tous (ou en partie) à l'état haut. Elle a pour but d'établir un contact avec certaines unités esclaves et de vérifier leur réponse à un ordre particulier.

Au cours du bit qui l'identifie, chaque unité esclave émet une information concernant son état en direction de l'unité maître.

L'unité maître émet ensuite un deuxième message de commande tel que les bits d'adressage placés à l'état haut dans la commande précédente sont tous à l'état bas par exemple. Ce message a pour but de remettre les unités esclaves dans un état neutre.

Au cours du bit qui leur est associé, les accessoires répondent à ce message pour confirmer à l'unité maître qu'ils sont revenus dans leur état neutre.

Dans un second mode d'exécution de la procédure de vérification du fonctionnement des unités esclaves, la trame communiquée aux unités esclaves est basée sur l'état du réseau au moment de la commande de vérification. L'unité maître présente en mémoire les états des différentes unités esclaves après la dernière commande.

Lors de l'émission d'une première trame de vérification, les valeurs données sur les bits associés aux unités esclaves au cours d'un premier message de commande sont les inverses des valeurs des états des unités esclaves sauvegardées dans l'unité maître.

De la même manière que précédemment, les unités esclaves répondent, puis une deuxième trame est émise. Les valeurs des bits associés aux différentes unités esclaves reprennent alors les valeurs initiales des états de ces unités.

Ainsi, suite à ces deux trames de vérification, les différentes unités esclaves sont revenues dans leur état initial et l'unité maître a pu tester les réponses des unités esclaves que ce soit en réponse à un état bas ou à un état haut.

On préfèrera cependant une règle selon laquelle la réponse des esclaves est systématique, c'est-à-dire une impulsion de courant est systématiquement envoyée, mais le décalage de celle-ci, dans le temps (toujours au cours de la transmission du bit particulier qui lui correspond) ou en intensité, définit la valeur de l'état. Dans ce cas, chaque message de commande permet à l'unité maître de contrôler les différents accessoires du réseau et des messages supplémentaires de contrôle ne sont pas nécessaires.

### Synchronisation :

La simplicité des échanges entre les unités esclaves et l'unité maître peut permettre d'effectuer rapidement la synchronisation d'unités esclaves.

Par exemple, il est courant d'utiliser une ou plusieurs paires de cellules photoélectriques pour détecter la présence d'un corps à proximité de l'élément mobile lorsque celui-ci est déplacé.

Chaque paire de cellules photoélectriques est constituée d'un émetteur d'ondes lumineuses et d'un récepteur de ces ondes. La synchronisation est généralement nécessaire pour éviter des interférences entre différentes paires de cellules photoélectriques installées proches les unes des autres. De même, une vérification de transmission correcte du signal lumineux est nécessaire pour vérifier le bon état de fonctionnement de la paire de cellules photoélectriques.

Cette synchronisation est généralement mise en oeuvre par échange d'un signal de synchronisation entre les paires de cellules photoélectriques.

Selon l'invention, il est très facile de commander une séquence d'activité « ON » suivie d'inactivité « OFF » de l'émetteur d'ondes lumineuses et simultanément, d'émettre une requête sur l'état du récepteur d'ondes lumineuses. Du fait du protocole de communication, cette synchronisation est très rapide et peut être mise en oeuvre avant chaque mouvement commandé de l'élément mobile.

Comme cela a été mentionné par rapport aux messages de contrôle, il n'est pas nécessaire à la cellule photoélectrique d'attendre la vérification du code d'intégrité avant d'exécuter la commande en réponse à un message de contrôle ou de synchronisation. Ainsi, au cours de la transmission de la trame, la cellule photoélectrique émettrice reçoit un ordre d'état haut (ON) et se met en route. La réception effective du faisceau lumineux en provenance de la cellule photoélectrique émettrice provoque le changement d'état de la cellule photoélectrique réceptrice, qui peut le signaler lorsqu'elle reçoit à son tour un bit de requête d'état dans cette même trame.

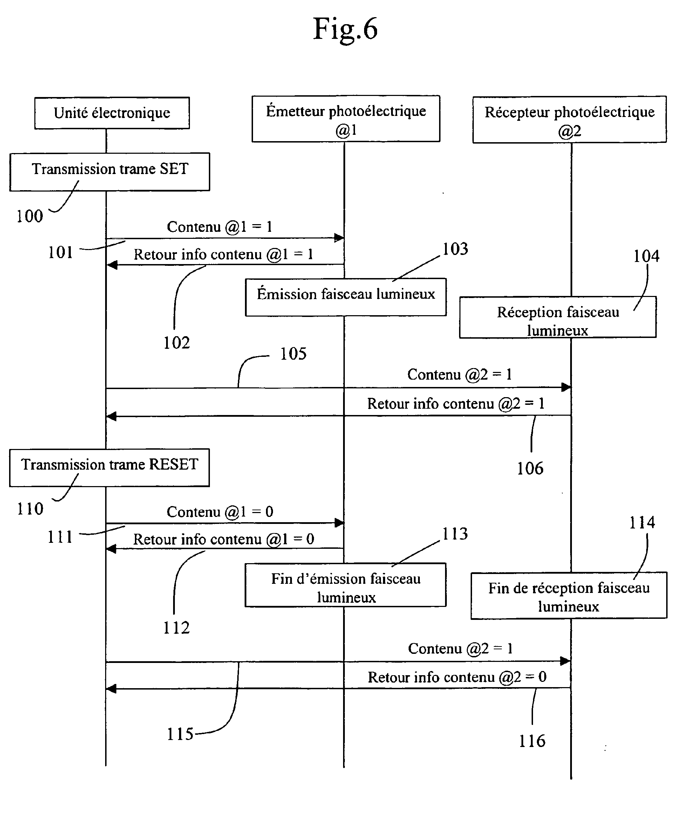

Un exemple de procédure est décrit ci-après en référence à la figure 6. Dans une première étape représentée par la flèche 100, une première trame (SET) est émise depuis l'unité maître. Cette trame est reçue, en séquence, par toutes les unités esclaves concernées et notamment par un émetteur photoélectrique et un récepteur photoélectrique constitué chacun par une cellule photoélectrique. En premier lieu, l'émetteur photoélectrique reçoit et lit le contenu du bit qui lui est adressé dans une étape 101. Du fait de l'état (haut) du bit d'adressage de cette trame correspondant à l'adresse locale de l'émetteur photoélectrique, celui-ci réagit en envoyant une impulsion de courant pendant le bit d'adressage qui lui est associé. Cet envoi est représenté par la flèche 102 et correspond à une confirmation de la bonne réception de l'ordre. Dans une étape 103, l'émetteur photoélectrique exécute l'ordre et émet donc un faisceau lumineux. De son côté, le récepteur photoélectrique reçoit, dans une étape 104, le faisceau lumineux en provenance de l'émetteur photoélectrique, alors qu'il n'a pas encore reçu le bit de la trame de commande qui lui est adressé. Le récepteur photoélectrique modifie alors son état. Cette modification d'état peut par exemple consister en une modification d'une valeur stockée dans une mémoire.

Simultanément, l'unité maître poursuit la transmission de la trame de commande. Le récepteur photoélectrique reçoit alors le bit qui lui correspond (étape 105) et interprète l'impulsion reçue comme une requête d'état. Etant donnée la valeur modifiée qu'il contient en mémoire du fait de la réception d'un signal lumineux, il réagit en envoyant une impulsion de courant pendant le bit d'adressage qui lui est associé. Cet envoi est représenté par la flèche 106. L'unité maître est ainsi informée de la réception par le récepteur photoélectrique du faisceau émis par l'émetteur photoélectrique.

L'unité maître termine alors la transmission de cette trame de commande de synchronisation.

Une nouvelle trame (RESET) est alors envoyée au cours d'une étape 200. Les étapes suivantes correspondent se déroulent suivant un même schéma que pour les étapes 101 à 106 décrites précédemment. En revanche, le contenu du bit adressé à l'émetteur photoélectrique est dans ce cas à zéro (étape 111), ce qui a pour effet, une réponse de l'émetteur photoélectrique également à zéro (étape 112) et l'arrêt de l'émission du faisceau lumineux (étape 113). Le récepteur photoélectrique ne recevant plus le faisceau (étape 114) modifie son état, qu'il communique à l'unité maître en réponse au bit de la trame de commande qui lui est adressé (étapes 115 et 116).

Ainsi, suite à la succession des étapes 100 à 116, l'unité maître vérifie la bonne synchronisation entre l'émission et la réception du faisceau lumineux entre les cellules photoélectriques.

Ces étapes peuvent être réitérées plusieurs fois, avant le fonctionnement commandé de l'actionneur, sans que cela ne soit perceptible à l'utilisateur, compte tenu de la vitesse de transmission et de réponse.

Dans cet exemple, l'ordre d'adressage des différents accessoires est évidemment important, ainsi que le débit de transmission en regard de la vitesse de réaction de l'émetteur photoélectrique.

Si le récepteur n'a pas reçu le faisceau lumineux avant la lecture du bit qui lui est associé (ou que son adresse locale correspond à un bit placé avant celui de l'émetteur), la réponse contenant le changement d'état est différée à la trame suivante.

Il est également possible de tester la synchronisation de la paire d'accessoires par un message de commande. Dans ce cas, le récepteur ne reçoit le faisceau lumineux qu'une fois la trame de commande complètement transmise. Il ne confirme à l'unité maître la réception de ce message qu'au cours de la trame suivante.

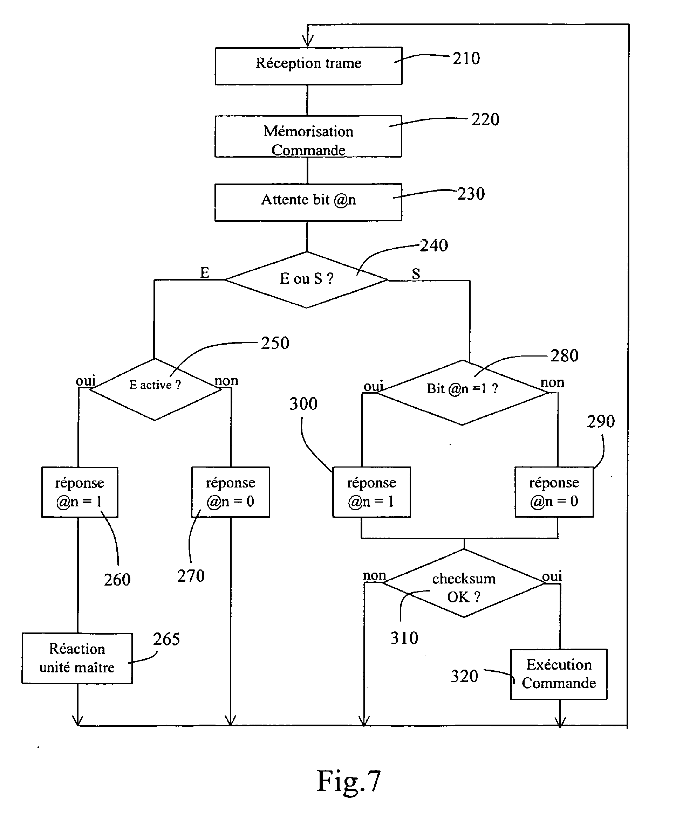

L'ordinogramme de la figure 7 représente les diverses réactions possibles des unités esclaves aux trames émises par l'unité maître.

Comme représenté à la figure 7, les unités esclaves répondent quelle que soit la valeur du bit d'adressage de la trame. Ces unités réagissent à la commande en fonction de leur catégorie (unité esclave assurant des fonctions d'entrée ou unité esclave assurant des fonctions de sortie).

Une unité esclave assurant des fonctions de sortie envoie au cours de la transmission du bit d'adressage qui lui est associé un écho à celui-ci (impulsion de courant correspondant à l'état du bit reçu) pour confirmer la réception de l'ordre. L'unité maître vérifie ainsi si l'ordre qu'elle a émis est bien arrivé à destination et avec la bonne valeur.

Une unité esclave assurant des fonctions d'entrée envoie également une impulsion de courant pendant le bit d'adressage qui lui est associé. Cet envoi dépend de son état.

La position, dans le temps de transmission du bit d'adressage, de l'impulsion de courant, ou éventuellement l'intensité de l'impulsion de courant, indique l'état de l'unité esclave.

Dans une première étape 210, une unité esclave commence à recevoir une trame émise par l'unité maître. Dans une deuxième étape 220, les bits de commande constituant le début de cette trame sont mis en mémoire dans l'unité esclave. Dans une troisième étape 230, l'unité esclave commence à recevoir les bits d'adressage.

On ne passe à l'étape suivante qu'au moment où le bit d'adressage est celui de l'unité concernée.

Si l'unité esclave assure des fonctions d'entrée (test 240) et si cette unité est dans un état actif (test 250), elle envoie, dans une étape 260, une impulsion de courant pendant la réception du bit d'adressage auquel elle est associée (débutant à un instant t1 pendant la réception du bit d'adressage auquel elle est associée) pour signifier à l'unité maître son état actif. Cette réponse provoque, dans une étape 265, une réaction de l'unité maître (pilotage d'un actionneur, émission d'une commande spécifique, etc.)

Si l'unité esclave assure des fonctions d'entrée (test 240) et si cette unité est dans un état passif (test 250), elle envoie, dans une étape 270, une impulsion de courant (débutant à un instant t0 pendant la réception du bit d'adressage auquel elle est associée) pour signifier à l'unité maître son état passif.

Cette procédure permet à l'unité maître de vérifier systématiquement que la commande est bien reconnue. En effet, les unités esclaves peuvent être placées manuellement ou automatiquement dans un état éteint. Si aucune impulsion de courant n'est reçue en réponse par l'unité maître, celle-ci peut alors considérer que l'unité esclave est dans un état éteint.

Si l'unité esclave assure des fonctions de sortie (test 240) et si le bit d'adressage auquel elle est associée est à l'état bas (test 280), elle envoie, dans une étape 290, une impulsion de courant débutant à un temps t0 pendant la réception du bit d'adressage auquel elle est associée, pour signifier à l'unité maître la réception de la trame. Dans une étape 310, l'unité esclave vérifie l'intégrité de la trame émise en calculant une valeur image des trois premiers octets de la trame et en comparant cette image au quatrième octet de la trame. Si la valeur est égale à la valeur du dernier octet de la trame, la commande selon l'état du bit reçu à l'étape 280 est exécutée à l'étape 320 (par exemple, dans le cas d'une lampe, celle-ci est éteinte).

Si l'unité esclave assure des fonctions de sortie (test 240) et si le bit d'adressage auquel elle est associée est à l'état haut (test 280), elle envoie, dans une étape 300, une impulsion de courant débutant à un temps t1 pendant la réception du bit d'adressage auquel elle est associée. Dans une étape 310, l'unité esclave vérifie l'intégrité de la trame émise en calculant une valeur image des trois premiers octets de la trame et en comparant cette image au quatrième octet de la trame. Si la valeur est égale à la valeur du dernier octet de la trame, la commande selon l'état du bit reçu à l'étape 280 est exécutée à l'étape 320 (par exemple, dans le cas d'une lampe, celle-ci est allumée).

Dans un deuxième cas non représenté, pour limiter les réponses nécessaires par exemple dans une commande de contrôle ou pour sélectionner certaines unités esclaves (parmi celles assurant une fonction d'entrée), celles-ci ne réagissent que si le bit d'adressage qui leur est associé est égal à 1.

Ainsi, une unité esclave assurant des fonctions d'entrée non sélectionnée dans une trame (bit d'adressage qui lui est associé est égal à 0) n'envoie pas de réponse à l'unité maître pour lui communiquer son état. Il est ainsi possible d'inhiber certaines unités esclaves à partir d'une programmation de l'unité maître.

Enfin, on peut mettre à profit les enseignements de l'invention pour simplifier encore le protocole dans le cas d'installations simples. Une variante consiste par exemple à supprimer le premier octet des trames de commandes : une trame devient porteuse d'information aussi bien vers les unités assurant des fonctions d'entrée que vers les unités assurant des fonctions de sortie. Chacune des unités assurant des fonctions d'entrée et assurant des fonctions de sortie réplique systématiquement par la duplication de son état présent, ceci pendant le bit qui la concerne.

Un état haut envoyé dans la trame par l'unité maître est alors un ordre de changement d'état.

L'octet de contrôle de redondance cyclique peut également être omis. Dans ce cas, tout message n'est définitivement validé que s'il a été confirmé n fois au cours de m transmissions consécutives (n valant par exemple 2 et m valant par exemple 3).

De même, d'autres méthodes pourraient être mises en oeuvre pour l'obtention des impulsions de tension à partir de l'unité maître, la lecture de ces impulsions par les unités esclaves ou encore pour la gestion des collisions.

## Revendications

1. Procédé de communication dans une installation domotique (10, 20) de manoeuvre motorisée d'un élément mobile de fermeture, d'occultation ou de protection solaire ou d'un écran comprenant une unité maître (10) et au moins deux unités esclaves (20) reliées à des dispositifs électriques (LP1, K1), l'unité maître (10) et les unités esclaves (20) étant connectées à un bus (BUS1, BUS2) de transmission d'informations, **caractérisé en ce qu'**une unité esclave est identifiée dans un message émis par l'unité maître et **en ce que** l'unité esclave (20) répond à un message émis par l'unité maître (10) pendant la durée d'émission de ce message.

2. Procédé de communication selon la revendication 1, **caractérisé en ce que** chaque unité esclave (20) est identifiée dans une trame d'un message émis par l'unité maître (10) par la position d'un bit particulier de cette trame et **en ce que** la réponse de cette unité esclave (20) intervient au cours de la durée d'émission de ce bit particulier.

3. Procédé de communication selon l'une des revendications précédentes, **caractérisé en ce que** la transmission d'informations de l'unité maître (10) vers les unités esclaves (20) se fait sous la forme d'une modulation de tension électrique et la transmission d'informations des unités esclaves (20) vers l'unité maître (10) se fait sous la forme de modulation de courant électrique.

4. Procédé de communication selon la revendication précédente, **caractérisé en ce que** la transmission d'informations de l'unité maître (10) vers les unités esclaves (20) se fait sous la forme d'une modulation de tension électrique alternative.

5. Procédé de communication selon l'une des revendications 3 ou 4, **caractérisé en ce que** la valeur d'une information transmise par une unité esclave (20) dépend de l'intensité d'une impulsion de courant circulant dans le bus ou d'un décalage temporel de cette impulsion de courant.

6. Procédé de communication selon l'une des revendications précédentes, **caractérisé en ce que** la position du bit particulier qui identifie une unité esclave (20) dans une trame d'un message est définie lors de la transmission d'une adresse locale dans une trame de configuration.

7. Procédé de communication selon l'une des revendications précédentes, **caractérisé en ce qu'**une trame d'un message transmise par l'unité maître (10) vers une unité esclave assurant une fonction de sortie comprend un ordre d'état d'un dispositif électrique (LP1) relié à cette unité esclave (20).

8. Procédé de communication selon la revendication 7, **caractérisé en ce que** l'unité esclave (20) répond à l'ordre de l'unité maître (10) par un signal image de l'ordre d'état émis.

9. Procédé de communication selon l'une des revendications 1 à 6, **caractérisé en ce qu'**une trame d'un message transmise par l'unité maître (10) vers une unité esclave (20) assurant une fonction d'entrée comprend une requête d'état d'un dispositif électrique (K1) relié à cette unité esclave.

10. Procédé de communication selon la revendication 9, **caractérisé en ce que** l'unité esclave (20) répond à la requête de l'unité maître (10) par un signal image de l'état du dispositif électrique (K1) relié à cette unité esclave.

11. Installation domotique (10, 20) de manoeuvre motorisée d'un élément mobile de fermeture, d'occultation ou de protection solaire ou d'un écran comprenant une unité maître (10) et au moins une unité esclave (20) reliée à un dispositif électrique (LP1, K1), l'unité maître et la ou les unités esclaves étant connectées à un bus (BUS1, BUS2) de transmission d'informations, **caractérisée en ce qu'**elle comprend des moyens matériels (CPU-M, CPU-S1) et logiciels pour la mise en oeuvre du procédé de communication selon l'une des revendications précédentes.

12. Installation selon la revendication 11, **caractérisée en ce que** le bus de transmission d'informations permet également l'alimentation des unités esclaves (20) depuis l'unité maître (10).

13. Installation selon la revendication 11 ou 12, **caractérisée en ce que** l'unité maître commande l'alimentation d'un moteur électrique.

14. Unité maître (10) contrôlant l'alimentation d'un moteur électrique pour manoeuvrer un élément mobile de fermeture, d'occultation ou de protection solaire ou d'un écran et destiné à être reliée à un bus (BUS1, BUS2) de transmission d'informations et d'énergie électrique, comprenant un générateur de tension continue (BAT) et un microcontrôleur (CPU-M), **caractérisée en ce qu'**elle comprend un circuit onduleur (INV) dont la sortie est destinée à être reliée au bus et dont l'entrée est reliée au générateur de tension continue au travers d'un élément de mesure de courant (RM), **en ce que** le circuit onduleur (INV) est piloté par le microcontrôleur (CPU-M) et **en ce que** l'unité maître (10) comprend des moyens matériels (CPU-M) et logiciels pour la mise en oeuvre du procédé de communication selon l'une des revendications 1 à 10.

15. Unité esclave (20) destinée à être reliée d'une part à un bus de transmission d'informations et d'énergie électrique et, d'autre part, à un dispositif électrique (K1) de commande de mouvement d'un moteur ou à un dispositif électrique (LP1) d'information ou à un dispositif électrique de sécurité, **caractérisée en ce qu'**elle comprend des moyens matériels (CPU-S1) et logiciels pour la mise en oeuvre du procédé de communication selon l'une des revendications 1 à 9.

## Claims

1. A method of communication in a home automation installation (10, 20) for motorized maneuvering of a moveable element for closure, for privacy or for solar protection or of a screen comprising a master unit (10) and at least two slave units (20) linked to electrical devices (LP1, K1), the master unit (10) and the slave units (20) being connected to an information transmission bus (BUS1, BUS2), wherein a slave unit is identified in a frame of a message emitted by the master unit (10) and wherein the slave unit (20) responds to a message emitted by the master unit (10) during the duration of emission of this message.

2. The method of communication as claimed in claim 1, wherein each slave unit (20) is identified in a frame of a message emitted by the master unit (10) by the position of a particular bit of this frame and wherein the response of this slave unit (20) intervenes in the course of the duration of emission of this particular bit.

3. The method of communication as claimed in one of the preceding claims, wherein the transmission of information from the master unit (10) to the slave units (20) is effected in the form of an electrical voltage modulation and the transmission of information from the slave units (20) to the master unit (10) is effected in the form of electrical current modulation.

4. The method of communication as claimed in the preceding claim, wherein the transmission of information from the master unit (10) to the slave units (20) is effected in the form of an ac electrical voltage modulation.

5. The method of communication as claimed in one of claims 3 or 4, wherein the value of an item of information transmitted by a slave unit (20) depends on the strength of a current pulse flowing in the bus or a temporal shift of this current pulse.

6. The method of communication as claimed in one of the preceding claims, wherein the position of the particular bit which identifies a slave unit (20) in a frame of a message is defined during the transmission of a local address in a configuration frame.

7. The method of communication as claimed in one of the preceding claims, wherein a message frame transmitted by the master unit (10) to a slave unit performing an output function comprises an order of state of an electrical device (LPI) linked to this slave unit (20).

8. The method of communication as claimed in claim 7, wherein the slave unit (20) responds to the order of the master unit (10) with a signal which is the image of the order of state emitted.

9. The method of communication as claimed in one of claims 1 to 6, wherein a message frame transmitted by the master unit (10) to a slave unit (20) performing an input function comprises a request of state of an electrical device (K1) linked to this slave unit.

10. The method of communication as claimed in claim 9, wherein the slave unit (20) responds to the request of the master unit (10) with a signal which is the image of the state of the electrical device (K1) linked to this slave unit.

11. A home automation installation (10, 20) for motorized maneuvering of a moveable element for closure, for privacy or for solar protection or of a screen comprising a master unit (10) and at least one slave unit (20) linked to an electrical device (LP1, K1), the master unit and the slave unit(s) being connected to an information transmission bus (BUS1, BUS2), which comprises hardware means (CPU-M, CPU-S1) and software means for the implementation of the method of communication as claimed in one of the preceding claims.

12. The installation as claimed in claim 11, wherein the information transmission bus also allows the supplying of the slave units (20) from the master unit (10).

13. The installation as claimed in claim 11 or 12, wherein the master unit controls the supply to an electric motor.

14. A master unit (10) controlling the supply to an electric motor for maneuvering a moveable element for closure, for privacy or for solar protection or a screen and intended to be linked to an electrical energy and information transmission bus (BUS1, BUS2), comprising a dc voltage generator (BAT) and a microcontroller (CPU-M), which comprises an inverter circuit (INV) whose output is intended to be linked to the bus and whose input is linked to the dc voltage generator through a current measurement element (RM), the inverter circuit (INV) being commanded by the microcontroller (CPU-M) and the master unit comprising hardware means (CPU-M) and software means for the implementation of the method of communication as claimed in one of claims 1 to 10.

15. A slave unit (20) intended to be linked on the one hand to an electrical energy and information transmission bus and, on the other hand, to an electrical device (K1) for controlling movement of a motor or to an electrical information device (LP1) or to an electrical security device, which comprises hardware means (CPU-S1) and software means for the implementation of the method for communication as claimed in one of claims 1 to 9.

## Patentansprüche

1. Verfahren zur Kommunikation in einer Hausanlage (10, 20) zur motorisierten Betätigung eines beweglichen Organs zwecks Schliessen, Verdunkeln, zum Sonnenschutz oder zur Betätigung einer Abschirmung, wobei die Anlage eine Haupteinheit (10) und zumindest zwei Untereinheiten (20) aufweist, welche an elektrische Vorrichtungen (LP1, K1) angeschlossen sind, und wobei die Haupteinheit (10) und die Untereinheiten (20) an einen Bus (BUS1, BUS2) zur Übertragung von Informationen angeschlossen sind, **dadurch gekennzeichnet, dass** eine Untereinheit in einer Nachricht, welche die Haupteinheit aussendet, identifiziert wird, und dass die Untereinheit (20) auf eine von der Haupteinheit (10) ausgesandte Nachricht während der Dauer der Sendung der Nachricht antwortet.

2. Verfahren zur Kommunikation nach Anspruch 1, **dadurch gekennzeichnet, dass** jede Untereinheit (20) in einem Frame einer von der Haupteinheit (10) ausgegebenen Nachricht durch die Position eines besonderen Bits in diesem Frame identifiziert wird, und dass die Antwort dieser Untereinheit (20) im Verlauf der Sendedauer dieses besonderen Bits erfolgt.

3. Verfahren zur Kommunikation nach einem der vorstehenden Ansprüche, **dadurch gekennzeichnet, dass** die Übertragung von Informationen von der Haupteinheit (10) zu den Untereinheiten (20) in Form einer Modulation der elektrischen Spannung und die Übermittlung von Informationen von den Untereinheiten (20) zur Haupteinheit (10) in Form einer Modulation des elektrischen Stroms erfolgt.

4. Verfahren zur Kommunikation nach dem vorhergehenden Anspruch, **dadurch gekennzeichnet, dass** die Übermittlung von Informationen von der Haupteinheit (10) zu den Untereinheiten (20) in Form einer Modulation einer elektrischen Wechselspannung erfolgt.

5. Verfahren zur Kommunikation nach einem der Ansprüche 3 und 4, **dadurch gekennzeichnet, dass** der Wert einer Information, welche von einer Untereinheit (20) übertragen wird, von der Stärke eines Strompulses abhängt, welcher im Bus zirkuliert, oder von einer zeitlichen Verschiebung dieses Strompulses.

6. Verfahren zur Kommunikation nach einem der vorstehenden Ansprüche, **dadurch gekennzeichnet, dass** die Position des besonderen Bits, das eine Untereinheit (20) identifiziert, im Frame einer Nachricht bei der Übertragung einer örtlichen Adresse in einem Konfiguration-Frame definiert ist.

7. Verfahren zur Kommunikation nach einem der vorstehenden Ansprüche, **dadurch gekennzeichnet, dass** ein Nachrichten-Frame, welcher von der Haupteinheit (10) zu einer Untereinheit übertragen wird, die eine Ausgangsfunktion sichert, eine Zustandsordnung einer elektrischen Vorrichtung (LP1) umfasst, welche mit dieser Untereinheit (20) verbunden ist.

8. Verfahren zur Kommunikation nach Anspruch 7, **dadurch gekennzeichnet, dass** die Untereinheit (20) auf den Befehl der Haupteinheit (10) durch ein Spiegelsignal des ausgegebenen Zustandsbefehls antwortet.

9. Verfahren zur Kommunikation nach einem der Ansprüche 1 bis 6, **dadurch gekennzeichnet, dass** ein Nachrichten-Frame, der von der Haupteinheit (10) an eine Untereinheit (20) übertragen wird und eine Eintrittsfunktion wahrnimmt, eine Zustandsanfrage einer elektrischen Vorrichtung (K1), welche mit dieser Untereinheit verbunden ist, enthält.

10. Verfahren zur Kommunikation nach Anspruch 9, **dadurch gekennzeichnet, dass** die Untereinheit (20) auf die Anfrage der Haupteinheit (10) durch ein Spiegelsignal des Zustandes der elektrischen Vorrichtung (K1), welche mit dieser Untereinheit verbunden ist, antwortet.

11. Haustechnische Anlage (10, 20) zur motorischen Betätigung eines beweglichen Organs zum Schliessen, Verdunkeln oder Sonnenschutz oder zur Betätigung einer Abschirmung, mit einer Haupteinheit (10) und wenigstens einer Untereinheit (20), die mit einer elektrischen Vorrichtung (LP1, K1) verbunden ist, wobei die Haupteinheit und die Untereinheit(en) an einen Bus (BUS1, BUS2) zur Übermittlung von Informationen angeschlossen sind, **dadurch gekennzeichnet, dass** die Anlage Hardwarekomponenten (CPU-M, CPU-S1) und Softwarekomponenten zur Ausführung des Kommunikationsverfahrens nach einem der vorstehenden Ansprüche aufweist.

12. Anlage nach Anspruch 11, **dadurch gekennzeichnet, dass** der Bus zur Übermittlung von Informationen ausserdem die Speisung der Untereinheiten (20) durch die Haupteinheit (10) erlaubt.

13. Anlage nach Anspruch 11 oder 12, **dadurch gekennzeichnet, dass** die Haupteinheit die Speisung eines Elektromotors steuert.

14. Haupteinheit (10) zur Steuerung der Speisung eines Elektromotors zur Betätigung eines beweglichen Organs zwecks Schliessen, Verdunkeln, zum Sonnenschutz oder zur Betätigung einer Abschirmung, wobei das Organ zum Anschluss an einen Bus (BUS1, BUS2) zur Übermittlung von Informationen und von elektrischer Energie bestimmt ist und die Haupteinheit einen Gleichspannungsgenerator (BAT) sowie ein Mikrosteuergerät (CPU-M) enthält, **dadurch gekennzeichnet, dass** sie eine Wechselrichterschaltung (INV) enthält, deren Ausgang zum Anschluss an den Bus bestimmt ist, und deren Eingang über ein Strommesselement (RM)mit dem Gleichspannungsgenerator verbunden ist, dass die Wechselrichterschaltung (INV) vom Mikrosteuergerät (CPU-M) gesteuert wird, und dass die Haupteinheit (10) Hardware (CFU-M) und Software zur Durchführung des Verfahrens nach einem der Ansprüche 1 bis 10 aufweist.

15. Untereinheit (20) zur Verbindung einerseits mit einem Bus zur Übermittlung von Informationen und elektrischer Energie und andererseits mit einer elektrischen Vorrichtung (K1) zur Steuerung der Bewegung eines Motors, oder mit einer elektrischen Vorrichtung (LP1) für Informationen, oder mit einer elektrischen Sicherheitsvorrichtung, **dadurch gekennzeichnet, dass** die Untereinheit Hardwarekomponenten (CPU-S1) und Softwarekomponenten zur Ausführung des Kommunikationsverfahrens gemäss einem der Ansprüche 1 bis 9 aufweist.
